# EUROPÄISCHE PATENTSCHRIFT

(11) **EP 0 995 913 B1**
(45) Veröffentlichungstag und Bekanntmachung des Hinweises auf die Patenterteilung: **22.03.2006**
(21) Anmeldenummer: 99810943.3
(22) Anmeldetag: 18.10.1999
(51) Int. Cl.: F16B 13/08

(54) **Hinterschnittdübel**
Anchor for borehole with undercut
Cheville pour trou de forage à contre-dépouille

(30) Priorität: 22.10.1998 DE 19848704
(43) Veröffentlichungstag der Anmeldung: 26.04.2000
(73) Patentinhaber: HILTI Aktiengesellschaft, 9494 Schaan (LI)
(72) Erfinder: Belz, Thomas, 80689 München (DE); Werner, Michael, 81547 München (DE)
(74) Vertreter: Wildi, Roland

(56) Entgegenhaltungen:
- EP-A- 0 417 429
- US-A- 4 656 806
- US-A- 4 678 383

## Beschreibung

Die Erfindung betrifft einen Hinterschnittdübel gemäss dem Oberbegriff des Patentanspruchs 1.

In Befestigungsanwendungen, bei denen geringe Achs- und Randabstände eingehalten werden müssen, kommen im allgemeinen formschlüssig verankernde Befestigungssysteme zur Anwendung. Neben der Möglichkeit, einen Kopfbolzen durch Eingiessen im Untergrund zu verankern, werden derartige abstandskritische Befestigungen auch mit Hinterschnittsystemen erstellt. Eine bekannte Art eines Hinterschnittsystems ist in Bohrungen verankerbar, in denen mit Hilfe eines Spezialwerkzeugs in der Nähe des Bohrlochgrunds eine Hinterschneidung vorbereitet ist. Dazu wird eine Ankerstange mit aufgesetzter Spreizhülse in die Bohrung eingesetzt, und die Spreizlappen der Spreizhülse werden durch eine Relatiwerschiebung zwischen der Hülse und einem sich in Setzrichtung erweiternden Kopfteil radial ausgestellt. Die in die Hinterschneidung ausgestellten Spreizlappen bilden in der Bohrung eine formschlüssige Verbindung zum Untergrund.

Eine Variante der Hinterschnittsysteme ist ohne spezielle Werkzeuge zur Vorbereitung der Hinterschneidung verankerbar, da sie sich beim Setzvorgang selbsttätig im Untergrund einen Formschluss erzeugen. Die Erzeugung des Formschlusses erfolgt beispielsweise durch Rotation der Spreizhülse, während sie durch axiale Schläge auf ein sich in Setzrichtung erweitemdes Kopfteil aufgetrieben wird. An den Spreizlappen sind Schneiden angeordnet, die sich während des Setzvorgangs fräsend eine Hinterschneidung in der Bohrung erzeugen. Nach Abschluss des Setzvorgangs bilden die radial ausgestellten Spreizlappen in der gerade erzeugten Hinterschneidung eine formschlüssige Verankerung. Neben diesen bekannten, auf Rotation beruhenden selbstschneidenden Hinterschnittdübeln, sind auch Hinterschnittsysteme bekannt, die sich ohne Rotation der Spreizhülse, allein durch meisselnde Bearbeitung der zylindrischen Bohrlochwandung innerhalb des Bohrlochs einen Formschluss erzeugen.

Hinterschnittsysteme können aus einer Ankerstange mit einem sich in Setzrichtung erweiternden Kopfteil und einer auf die Ankerstange aufgeschobenen Spreizhülse bestehen. Eine als Innengewindehülse ausgebildete Variante besitzt einen mit einer Durchgangsbohrung versehenen Grundkörper, der im rückwärtigen Abschnitt mit einem Innengewinde versehen ist. Am gegenüberliegenden Vorderende des Grundkörpers ist ein Aussenkonus angeordnet, der mit seinem durchmesserkleineren Abschnitt in der Durchgangsbohrung gehalten ist. Zur formschlüssigen Verankerung eines derartigen "Outcone-Dübels" wird der Grundkörper durch axiale Schläge über den sich am Bohrlochgrund abstützenden Aussenkonus getrieben. Die dabei radial ausgestellten Spreizelemente bearbeiten die Bohrlochwandung meisselnd und erzeugen derart eine Hinterschneidung. Während im Fall von Hinterschnittsystemen mit Ankerstangen im Fall von dynamischen Belastungen oder in gerissenem Beton ein gewisser Nachspreizeffekt gegeben ist, sind "Outcone-Dübel", bei denen eine Zuglast am Innengewinde des Grundkörpers angreift, nicht nachspreizend. Nicht nachspreizende, formschlüssige Verankerungen können im Fall von dynamischen Belastungen oder in gerissenem Beton bereits bei verhältnismässig niedrigen Lasten versagen.

Aus der US-A-4 678 383 ist ein Spreizanker mit einem teilweise längsgeschlitzen Hülsenkörper und einem zur Spreizung in den Hülsenkörper einziehbaren Spreizkegel eines Ankerbolzens bekannt. Der Hülsenkörper trägt ein Spreizelement, das in einer zum spreizkegelseitigen Ende in der Tiefe abnehmenden Ausnehmung angeordnet ist. Diese Ausnehmung ist in einer dem Spreizkegel abgewandten Richtung von einer Gelenkstelle beabstandet, die ein Aufbiegen des längsgeschlitzten Teils des Hülsenkörpers erleichtert.

Aufgabe der vorliegenden Erfindung ist es, diesen Nachteilen des Stands der Technik abzuhelfen. Es soll ein Outcone-Hinterschnittsystem geschaffen werden, welches auch bei dynamischer Belastung und in gerissenem Beton hohe Lastwerte aufweist. Die Lösung dieser Aufgabe besteht in einem Hinterschnittdübel mit den im kennzeichnenden Abschnitt des Patentanspruchs 1 angeführten Merkmalen. Insbesondere wird durch die Erfindung ein Hinterschnittdübel mit einem eine Durchgangsbohrung aufweisenden Grundkörper geschaffen, der in einem rückwärtigen Abschnitt mit einem Lastangriffsmittel, vorzugsweise mit einem Innengewinde, ausgestattet ist und an einem gegenüberliegenden, vorderen Abschnitt durch axiale Schlitze voneinander getrennte Spreizlappen besitzt, die durch axiales Auftreiben des Grundkörpers auf einen das Vorderende des Grundkörpers überragenden Spreizkörper, der sich in Setzrichtung erweitert und in der Durchgangsbohrung gehalten ist, radial ausstellbar sind. Die Spreiziappen erstrecken sich von einem plastischen Gelenk zum freien Vorderende des Grundkörpers. Der Grundkörper besitzt einen Aussendurchmesser, der am plastischen Gelenk unter Bildung einer in Setzrichtung weisenden Ringschulter gegenüber dem nach rückwärts anschliessenden Abschnitt des Grundkörpers reduziert ist. In Richtung des freien Vorderendes der Spreizlappen vergrössert sich der Aussendurchmesser wieder. Die Spreizlappen sind im an das plastische Gelenk anschliessenden Abschnitt von einer Spreizhülse umgeben, die wenigstens in ihrem in Setzrichtung vorderen Bereich radial aufweitbar ist und einen grössten Aussendurchmesser aufweist, der kleiner oder gleich dem grössten Aussendurchmesser des Grundkörpers ist.

Durch die Anordnung einer Spreizhülse, die im Bereich des plastischen Gelenks die Spreizlappen umgibt, ist Voraussetzung für ein Nachspreizen des Hinterschnittdübels unter Zugbelastung geschaffen. Während des Setzvorgangs ist die Spreizhülse nach rückwärts durch die am Übergang zum plastischen Gelenk am Grundkörper ausgebildete Ringschulter abgestützt. Dadurch wird sie gemeinsam mit dem Grundkörper in Setzrichtung vorgetrieben. Die wenigstens bereichsweise radiale Aufweitbarkeit der Spreizhülse gewährleistet, dass sie die radiale Aufweitung der Spreizlappen während des Auftreibens des Grundkörpers auf den konischen Spreizkörper nicht behindert. Vielmehr wird das Vorderende der Spreizhülse in die Hinterschneidung vorgetrieben. Bei dynamischer Zugbelastung des Hinterschnittdübels bzw. unter Zugbelastung in einem sich öffnenden Riss im Beton wird der Grundkörper nach rückwärts aus dem Bohrloch gezogen. Dabei kommt es zu einer Relativverschiebung zwischen dem Grundkörper und der Spreizhülse. Die radial ausgestellten Spreizlappen bewirken eine radiale Aufspreizung der Spreizhülse, die umso grösser ist, je grösser die Relativbewegung zwischen dem Grundkörper und der Spreizhülse ist. Dadurch ist der Hinterschnittdübel wieder im Bohrloch fixiert.

Zur Verbesserung der Nachführbarkeit der Spreizhülse in die von den Spreizlappen beim Setzvorgang meisselnd erzeugte Hinterschneidung erweist es sich von Vorteil, wenn die Spreizhülse einen in Setzrichtung abnehmenden Aussendurchmesser aufweist.

Der an die Ringschulter angrenzende Bereich der Spreizhülse weist mit Vorteil einen Aussendurchmesser auf, der dem Aussendurchmesser des Grundkörpers an der Ringschulter entspricht. Auf diese Weise kann die volle radiale Erstreckung der Ringschulter für das Vortreiben der Spreizhülse ausgenutzt werden.

Hinsichtlich der Dimensionierung der Spreizhülse erweist sich eine Länge als zweckmässig, die etwa 10% bis etwa 90% der axialen Erstreckung der Spreizlappen beträgt. Bei dieser Länge ist gewährleistet, dass die Spreizhülse die materialabtragende Bearbeitung der Bohrlochwand durch die Spreizlappen nicht behindert und sicher in die erstellte Hinterschneidung vorgeschoben werden kann.

Zur Erleichterung der radialen Aufspreizbarkeit der Spreizhülse ist sie mit wenigstens einem axialen Schlitz versehen, der sich von ihrem in Setzrichtung vorderen Ende Ober etwa 30% bis 100% ihrer axialen Länge erstreckt. Für die Montage ist die Spreizhülse im allgemeinen bereits mit wenigstens einem Ober ihre gesamte Länge verlaufenden Axialschlitz versehen. Dieser Schlitz kann in seiner gesamten Länge geöffnet verbleiben oder auch bereichsweise wieder geschlossen werden, indem beispielsweise Punktschweissungen angebracht werden. Weitere axiale Schlitze können bereits vor der Montage der Spreizhülse angebracht sein.

Während des Setzvorgangs wird die Spreizhülse durch die umlaufende Ringschulter am Grundkörper axial vorgetrieben. Dabei erweist es sich von Vorteil, wenn die an die Ringschulter anschliessende grösste Wandstärke der Spreizhülse etwa 10% bis etwa 70% der grössten Wandstärke des Grundkörpers beträgt.

Die radiale Aufspreizbarkeit der Spreizhülse kann auch dadurch unterstützt sein, dass die Spreizhülse aus einem leicht verformbaren Material, beispielsweise aus Polyamid besteht.

Der Nachspreizeffekt des erfindungsgemässen Hinterschnittdübels beruht auf der Relativverschiebung des Grundkörpers gegenüber der im Bohrloch fixierten Spreizhülse. Zur Verbesserung der axialen Fixierung der Spreizhülse erweist es sich als zweckmässig, wenn an der Aussenfläche der Spreizhülse radiale Vorsprünge vorgesehen sind, deren radialer Überstand gegenüber der Aussenfläche widerhakenartig jeweils zum rückwärtigen Ende der Spreizhülse hin zunimmt.

Indem die Spreizlappen eine torisch konkave Aussenfläche aufweisen, werden die Schneidkurve der freien Vorderenden der Spreizlappen und die Schleppkurve der nachfolgenden Abschnitte aneinander angeglichen. Dies verbessert auch die Nachführbarkeit der Spreizhülse in die erstellte Hinterschneidung.

Die Effektivität der materialabtragenden Bearbeitung der Bohrlochwandung durch die Spreizlappen wird dadurch verbessert, dass die freien Vorderenden der Spreizlappen mit Schneiden ausgestattet sind. Die Schneiden können auf an sich bekannte Art, durch spezielle Formgebung der freien Vorderenden erstellt sein. Es können auch Hartmetalleinsätze vorgesehen sein, welche von den freien Vorderenden abragen.

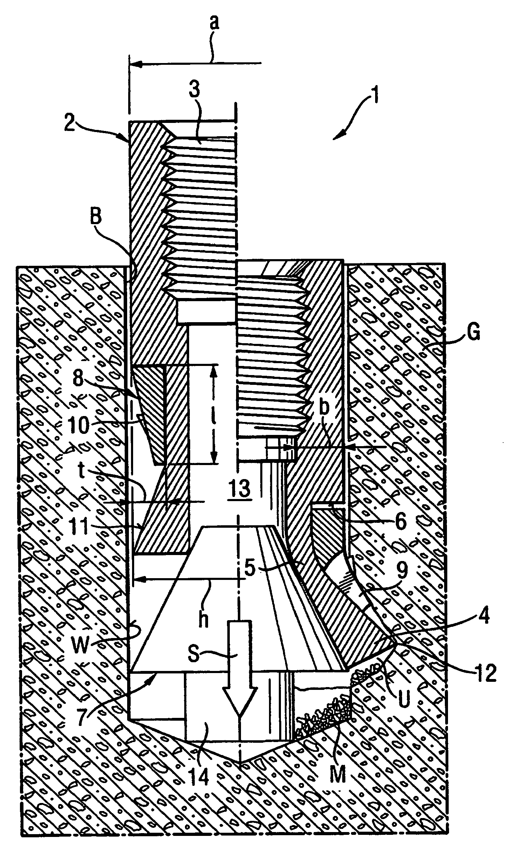

Im folgenden wird die Erfindung unter Bezugnahme auf die einzige, schematische Figur näher erläutert, in der die linke Hälfte den Vorderabschnitt eines erfindungsgemässen Hinterschnittdübels 1 in seiner Ausgangsstellung zeigt, während in der rechten Hälfte der Figur der Hinterschnittdübel 1 im verankerten Zustand dargestellt ist. Der Hinterschnittdübel 1 besitzt einen im wesentlichen zylindrischen Grundkörper 2 aus Metall, vorzugsweise aus einem rostfreien Stahl, der mit einer Durchgangsbohrung 13 versehen ist. Im rückwärtigen Abschnitt der Durchgangsbohrung 13 ist der Grundkörpers 2 mit einem Innengewinde 3 als Lastangriffsmittel ausgestattet. Das Innengewinde 3 ist ein Normgewinde. Der Innendurchmesser der Durchgangsbohrung im Bereich des Innengewindes bestimmt den Anschlussdurchmesser beispielsweise einer Gewindestange. Der Grundkörper 2 besitzt eine Wandstärke b, deren Grösse im Hinblick auf den vorgesehen Anschlussdurchmesser der Gewindestange, der Materialfestigkeit und die zu erreichenden Lastwerte festgelegt wird. Aus dem Innendurchmesser des Grundkörpers 2 im Bereich des Innengewindes 3 und der Wandstärke b des Grundkörpers 2 ergibt sich der grösste Aussendurchmesser des Grundkörpers 2, der bestimmt, mit welchem Durchmesser eine Bohrung B in einem Untergrund G, beispielsweise in Beton, erstellt werden muss.

An seinem dem Lastangriffsmittel 3 gegenüberliegenden, bezogen auf die Setzrichtung S vorderen Abschnitt weist der Grundkörper 2 eine Anzahl Spreizlappen 4 auf, die jeweils durch axiale Schlitze voneinander getrennt sind. Die Spreizlappen 4 erstrecken sich von einem plastischen Gelenk 5 zum freien Vorderende des Grundkörpers 2. Zur Bildung des plastischen Gelenks 5 ist der Grundkörper 2 in seinem Aussendurchmesser abgesetzt. Dadurch ergibt sich eine umlaufende Ringschulter 6, die in Setzrichtung S weist. Ausgehend von der Ringschulter 6 besitzen die Spreizlappen 4 zunächst einen Abschnitt mit konstantem Aussendurchmesser, um sich danach zum freien Vorderende hin wieder zu erweitem. Daraus ergibt sich für die Spreizlappen 4 eine im wesentlichen torisch konkave Aussenfläche 11, die beim radialen Ausstellen der Spreizlappen für eine möglichst gute Übereinstimmung der Schneid- und der Schleppkurve sorgt. Das radiale Ausstellen der Spreizlappen 4 erfolgt durch axiales Auftreiben des Grundkörpers 2 in Setzrichtung S auf ein konisches Spreizelement 7, das mit seinem durchmesserkleinsten Abschnitt in der Durchgangsbohrung 13 gehalten ist und das Vorderende des Grundkörpers überragt. An den freien Vorderenden der Spreizelemente 4 sind Schneiden 12 vorgesehen, die beispielsweise durch spezielle Formgebung und Härtung oder durch Schneideinsätze aus Hartmetall gebildet sein können. Wie in der Darstellung angedeutet, kann an den durchmessergrössten Abschnitt des Spreizkörpers 7 ein zylindrischer Fortsatz 14 anschliessen, der sich während des Setzvorgangs am Grund des Bohrlochs B abstützt und einen Freiraum für Material M schafft, das beim Setzvorgang von der Bohrlochwandung W abgebaut wird.

In dem an die Ringschulter 6 anschliessenden Abschnitt sind die Spreizlappen 4 von einer Spreizhülse 8 umgeben. Die Spreizhülse 8 besitzt einen grössten Aussendurchmesser h, der kleiner oder gleich dem Aussendurchmesser a des Grundkörpers 2 ist. Wie aus der Darstellung ersichtlich ist, besitzt die Spreizhülse 8 im Längsschnitt eine keilförmige Gestalt. Dabei ist ihr Aussendurchmesser h in Setzrichtung S verjüngt ausgebildet. Die Länge I der Spreizhülse 8 beträgt etwa 10% bis etwa 90% der Erstreckung der Spreizlappen 7 von der Ringschulter 6 bis zum freien Vorderende. Die Spreizhülse 8 weist ihre grösste Wandstärke t im an die Ringschulter 6 anschliessenden Bereich auf. Dabei ist die Wandstärke t zu etwa 10% bis etwa 70% der grössten Wandstärke b des Grundkörpers 2 gewählt. Vorzugsweise entspricht die grösste Wandstärke t der Breite der Ringschulter 6. Die Spreizhülse 8 weist wenigstens einen axialen Schlitz 9 auf, der sich über wenigstens 30% ihrer axialen Länge I erstreckt. An der Aussenfläche der Spreizhülse 8 können radial abragende Vorsprünge 10 vorgesehen sein. Die Vorsprünge 10 sind widerhakenartig ausgebildet; ihr radialer Überstand gegenüber der Aussenfläche der Spreizhülse 8 nimmt entgegen der Setzrichtung S zu. Die Spreizhülse 8 besteht üblicherweise aus einem Blechteil, vorzugsweise aus einem rostfreien Stahlblech. Sie kann auch aus einem leicht verformbaren Material bestehen, beispielsweise aus Polyamid.

Der Setzvorgang des erfindungsgemässen Hinterschnittdübels 1 erfolgt durch axiales Auftreiben des Grundkörpers 2 auf den sich am Grund des Bohrlochs B abstützenden Spreizkörper 7. Entsprechend der Relativbewegung zwischen dem Grundkörper 2 und dem Spreizkörper 7 werden die Spreizlappen 4 radial ausgestellt. Dabei tragen die Schneiden 12 an den freien Vorderenden der Spreizlappen 4 meisselnd Material M von der Bohrlochwandung W ab und erzeugen auf diese Weise eine Hinterschneidung U. Das abgebaute Material M sammelt sich am Grund des Bohrlochs B. Die Spreizhülse 8 wird von der umlaufenden Ringschulter 6 mitgenommen. Ihr vorderer, verjüngter Abschnitt wird gemeinsam mit den Spreizlappen 4 in die Hinterschneidung U vorgeschoben. Nach Abschluss des Setzvorgangs befindet sich der Hinterschnittdübel 1 in der in der rechten Hälfte der Darstellung angedeuteten Situation. Bei dynamischer Zugbelastung bzw. unter Zug in einem sich öffnenden Riss im Untergrund G wird der Grundkörper 2 entgegen der Setzrichtung S bewegt. Dabei laufen die Spreizlappen 4 gegen die im Bohrloch B verkeilte Spreizhülse 8 und spreizen diese noch weiter auf. Dadurch wird eine weitere Auszugsbewegung des Grundkörpers 2 verhindert.

## Patentansprüche

1. Hinterschnittdübel mit einem eine Durchgangsbohrung (13) aufweisenden Grundkörper (2), der in einem rückwärtigen Abschnitt mit einem Lastangriffsmittel (3), vorzugsweise mit einem Innengewinde, ausgestattet ist und an einem gegenüberliegenden, vorderen Abschnitt durch axiale Schlitze voneinander getrennte Spreizlappen (4) besitzt, die durch axiales Auftreiben des Grundkörpers (2) auf einen das Vorderende des Grundkörpers (2) überragenden Spreizkörper (7), der sich in Setzrichtung (S) erweitert und in der Durchgangsbohrung (13) gehalten ist, radial ausstellbar sind, **dadurch gekennzeichnet, dass** die Spreizlappen (4) sich von einem plastischen Gelenk (5) zum freien Vorderende des Grundkörpers (2) erstrecken, wobei der Aussendurchmesser (a) des Grundkörpers (2) am plastischen Gelenk (5) unter Bildung einer in Setzrichtung (S) weisenden Ringschulter (6) gegenüber dem nach rückwärts anschliessenden Abschnitt des Grundkörpers (2) reduziert ist und sich in Richtung des freien Vorderendes der Spreizlappen (4) wieder vergrössert, und die Spreizlappen (4) im an das plastische Gelenk (5) anschliessenden Abschnitt von einer Spreizhülse (8) umgeben sind, die wenigstens in ihrem in Setzrichtung (S) vorderen Bereich radial aufweitbar ist und einen grössten Aussendurchmesser (h) aufweist, der kleiner oder gleich dem grössten Aussendurchmesser (a) des Grundkörpers (2) ist.

2. Hinterschnittdübel nach Anspruch 1, **dadurch gekennzeichnet, dass** der Aussendurchmesser (h) der Spreizhülse (8) in Setzrichtung (S) abnehmend ausgebildet ist.

3. Hinterschnittdübel nach Anspruch 1 oder 2, **dadurch gekennzeichnet, dass** der an die Ringschulter (6) angrenzende Bereich der Spreizhülse (8) den grössten Aussendurchmesser (h) aufweist, der dem Aussendurchmesser (a) des Grundkörpers (2) an der Ringschulter (6) entspricht.

4. Hinterschnittdübei nach einem der vorangehenden Ansprüche, **dadurch gekennzeichnet, dass** die Spreizhülse (8) eine Länge (I) aufweist, die etwa 10% bis etwa 90% der axialen Erstreckung der Spreizlappen (4) beträgt.

5. Hinterschnittdübel nach einem der vorangehenden Ansprüche, **dadurch gekennzeichnet, dass** die Spreizhülse (8) wenigstens einen axialen Schlitz (9) aufweist, der sich von ihrem in Setzrichtung vorderen Ende über etwa 30% bis 100% ihrer axialen Länge erstreckt.

6. Hinterschnittdübel nach einem der vorangehenden Ansprüche, **dadurch gekennzeichnet, dass** die Spreizhülse (8) eine grösste Wandstärke (t) aufweist, die etwa 10% bis etwa 70% der grössten Wandstärke (b) des Grundkörpers (2) beträgt.

7. Hinterschnittdübel nach einem der vorangehenden Ansprüche, **dadurch gekennzeichnet, dass** die Spreizhülse (8) aus einem leicht verformbaren Material, beispielsweise aus Polyamid besteht.

8. Hinterschnittdübel nach einem der vorangehenden Ansprüche, **dadurch gekennzeichnet, dass** an der Aussenfläche der Spreizhülse (8) radiale Vorsprünge (10) vorgesehen sind, deren radialer Überstand gegenüber der Aussenfläche jeweils zum rückwärtigen Ende der Spreizhülse (8) hin zunimmt.

9. Hinterschnittdübel nach einem der vorangehenden Ansprüche, **dadurch gekennzeichnet, dass** die Spreizlappen (4) eine torisch konkave Aussenfläche (11) aufweisen.

10. Hinterschnittdübel nach einem der vorangehenden Ansprüche, **dadurch gekennzeichnet, dass** die freien Vorderenden der Spreizlappen (4) mit Schneiden (12) ausgestattet sind.

## Claims

1. Anchor for borehole with undercut, with a basic element (2) exhibiting a through hole (13), which element is equipped, in a rear section, with a load application means (3), preferably with a female thread, and exhibits straddling tabs (4) separated by axial slots on an opposing front section, which tabs are radially expandable, by axial driving of the basic element (2), to a straddling element (7) projecting from the front end of the basic element (2), which straddling element extends in the direction of setting (S) and is retained in the through hole (13), **characterised in that** the straddling tabs (4) extend from a plastic joint (5) to the free front end of the basic element, wherein the outside diameter (a) of the basic element (2) is reduced on the plastic joint (5), with the formation of an annular shoulder (6) pointing in the direction of setting (S) opposite the section of the basic element (2) connecting at the rear, and **in that** it is enlarged again in the direction of the free front end of the straddling tabs (4) and the straddling tabs (4) are surrounded in the section connected to the plastic joint (5) by a straddling sleeve (8) which can be expanded radially, at least in its front region in the direction of setting (S), and exhibits a maximum outside diameter (h) which is smaller than or equal to the maximum outside diameter (a) of the basic element (2).

2. Anchor for borehole with undercut according to Claim 1, **characterised in that** the outside diameter (h) of the straddling sleeve (8) is designed so that it reduces in the direction of setting (S).

3. Anchor for borehole with undercut according to Claim 1 or 2, **characterised in that** the region of the straddling sleeve (8) adjacent to the annular shoulder (6) exhibits the maximum outside diameter (h) which is equal to the outside diameter (a) of the basic element (2) on the annular shoulder (6).

4. Anchor for borehole with undercut according to any of the preceding claims, **characterised in that** the straddling sleeve (8) exhibits a length (I) which is approximately 10% to approximately 90% of the axial extension of the straddling tabs (4).

5. Anchor for borehole with undercut according to any of the preceding claims, **characterised in that** the straddling sleeve (8) exhibits at least one axial slot (9) which extends from its front end, in the direction of setting, over approximately 30% to 100% of its axial length.

6. Anchor for borehole with undercut according to any of the preceding claims, **characterised in that** the straddling sleeve (8) exhibits a maximum wall thickness (t) which is approximately 10% to approximately 70% of the maximum wall thickness (b) of the basic element (2).

7. Anchor for borehole with undercut according to any of the preceding claims, **characterised in that** the straddling sleeve (8) consists of an easily deformable material, for example of polyamide.

8. Anchor for borehole with undercut according to any of the preceding claims, **characterised in that** radial projections (10), whose radial projection from the outer surface increases towards the rear end of the straddling sleeve (8), are provided on the outer face of the straddling sleeve (8).

9. Anchor for borehole with undercut according to any of the preceding claims, **characterised in that** the straddling tabs (4) exhibit a torically concave outer face (11).

10. Anchor for borehole with undercut according to any of the preceding claims, **characterised in that** the free front ends of the straddling tabs (4) are equipped with cutting edges (12).

## Revendications

1. Cheville à contre-dépouille comprenant un corps de base (2) qui est pourvu d'un trou débouchant (13) et qui, dans une portion arrière, est muni d'un moyen d'application de charge (3), de préférence d'un taraudage, et, dans une portion avant située à l'opposé, possède des pattes expansibles (4), lesquelles sont séparées par des fentes axiales et sont déployables radialement par le fait que le corps de base (2) monte axialement sur un corps d'expansion (7) qui dépasse de l'extrémité avant du corps de base (2), qui s'élargit dans la direction de scellement (S) et qui est maintenu dans le trou débouchant (13), **caractérisée en ce que** les pattes expansibles (4) s'étendent à partir d'une articulation plastique (5) jusqu'à l'extrémité avant libre du corps de base (2), le diamètre extérieur (a) du corps de base (2) au niveau de l'articulation plastique (5) étant réduit, en formant un épaulement annulaire (6) orienté dans la direction de scellement (S), par rapport à la portion du corps de base (2) qui s'y raccorde vers l'arrière et augmentant à nouveau en direction de l'extrémité avant libre des pattes expansibles (4), et les pattes expansibles (4) étant entourées, dans la portion se raccordant à l'articulation plastique (5), par un manchon expansible (8) qui est déployable radialement au moins dans sa zone située à l'avant par rapport à la direction de scellement (S) et qui possède un diamètre extérieur maximal (h) inférieur ou égal au diamètre extérieur maximal (a) du corps de base (2).

2. Cheville à contre-dépouille selon la revendication 1, **caractérisée en ce que** le diamètre extérieur (h) du manchon expansible (8) diminue dans la direction de scellement (S).

3. Cheville à contre-dépouille selon la revendication 1 ou 2, **caractérisé en ce que** la zone du manchon expansible (8) adjacente à l'épaulement annulaire (6) présente le plus grand diamètre extérieur (h), lequel correspond au diamètre extérieur (a) du corps de base (2) au niveau de l'épaulement annulaire (6).

4. Cheville à contre-dépouille selon une des revendications précédentes, **caractérisée en ce que** le manchon expansible (8) possède une longueur (1) qui est égale à environ 10 % à environ 90 % de l'étendue axiale des pattes expansibles (4).

5. Cheville à contre-dépouille selon une des revendications précédentes, **caractérisée en ce que** le manchon expansible (8) est pourvu d'au moins une fente axiale (9) qui, depuis son extrémité située à l'avant par rapport à la direction de scellement, s'étend sur environ 30 % à 100 % de sa longueur axiale.

6. Cheville à contre-dépouille selon une des revendications précédentes, **caractérisée en ce que** le manchon expansible (8) possède une épaisseur de paroi maximale (t) qui est égale à environ 10 % à environ 70 % de l'épaisseur de paroi maximale (b) du corps de base (2).

7. Cheville à contre-dépouille selon une des revendications précédentes, **caractérisée en ce que** le manchon expansible (8) est réalisé en matériau facilement déformable, par exemple en polyamide.

8. Cheville à contre-dépouille selon une des revendications précédentes, **caractérisée en ce que** sur la surface extérieure du manchon expansible (8) sont prévues des saillies radiales (10) dont le dépassement radial par rapport à la surface extérieure augmente en direction de l'extrémité arrière du manchon expansible (8).

9. Cheville à contre-dépouille selon une des revendications précédentes, **caractérisée en ce que** les pattes expansibles (4) possèdent une surface extérieure à concavité torique (11).

10. Cheville à contre-dépouille selon une des revendications précédentes, **caractérisée en ce que** les extrémités avant libres des pattes expansibles (4) sont pourvues de taillants (12).
